# EUROPÄISCHE PATENTANMELDUNG

(11) **EP 1 500 552 A2**
(43) Veröffentlichungstag der Anmeldung: **26.01.2005**
(21) Anmeldenummer: 04013322.5
(22) Anmeldetag: 05.06.2004
(51) Int. Cl.: B60P 3/22

(54) **Fahrzeug mit bewegbarer Trennwand**

(30) Priorität: 24.07.2003 DE 10333575
(71) Anmelder: Kiesling Fahrzeugbau GmbH, 89160 Dornstadt-Tomerdingen (DE)
(72) Erfinder: Kiesling, Peter, 89081 Ulm (DE)
(74) Vertreter: Weber, Gerhard, Dipl.-Phys.

(57) **Zusammenfassung**

Für die Unterteilung des Laderaums eines Kühlfahrzeugs in zwei Temperaturzonen mittels einer Trennwand bei gleichzeitig im Laderaum vorhandenen Doppelstockschienen wird vorgeschlagen, die Trennwand biegbar zu gestalten.

## Beschreibung

Die Erfindung betrifft eine Fahrzeuganordnung mit einem durch eine Trennwand in zwei Teilräume unterteilbaren Laderaum, insbesondere einem Kühlraum.

Bei Kühlfahrzeugen mit einem typischerweise durch Seitenwände, eine Dachplatte und einen Boden einen rechteckigen, in Längsrichtung im wesentlichen gleichbleibenden Querschnitt aufweisenden Laderaum ist bei Bedarf zum Transport unterschiedlicher Waren die Aufteilung des Laderaums in zwei durch eine Trennwand getrennte Teilräume mit unterschiedlichen Temperaturen bekannt. Die im wesentlichen starre und entlang ihrer Kanten mit elastischen Dichtlippen versehene Trennwandplatte ist in einer Ruhestellung in geringem Abstand von der Dachplatte des Laderaums parallel zu dieser auf einem Führungsschlitten angeordnet, welcher in Führungsschienen am Dach oder an den Seitenwänden längsverschiebbar gelagert ist. Die Trennwandplatte kann zwischen der horizontalen Ruhestellung und der vertikalen Trennstellung durch Verschwenken um ein Lager im Bereich der Oberkante der Platte verlagert werden. Bei Vorliegen von gleichfalls gebräuchlichen Doppelstockschienen zur bedarfsweisen vertikalen Unterteilung des Laderaums durch eine vom Boden beabstandete zweite Lochebene ist die Verlagerung der Trennwand aufwändig und zeitraubend und verlängert die Lade- und Entladezeit.

Eine Laderaumunerteilung mit einer Trennwand kann auch bei anderen Transportaufgaben erforderlich werden.

Aufgabe der vorliegenden Erfindung ist daher, eine Fahrzeuganordnung mit einer verlagerbaren Trennwand anzugeben, welche gegenüber bekannten Anordnungen einfacher handhabbar ist, insbesondere in Verbindung mit Doppelstockschienen zur Laderaum-Unterteilung.

Die Erfindung ist im unabhängigen Anspruch beschrieben. Die abhängigen Ansprüche enthalten vorteilhafte Ausgestaltungen und Weiterbildungen der Erfindung.

Durch die biegbare Ausführung der Trennwand kann diese bei der Verlagerung zwischen einer ersten vertikalen Stellung, in welcher die Trennwand den Laderaum in zwei Teilräume unterteilt, und einer zweiten horizontalen Stellung, in welcher die Trennwand parallel zur Dachplatte des Laderaums in geringem Abstand von dieser liegt, Zwischenstellungen einnehmen, bei welchen ein Teil der Trennwand sich in der horizontalen Lage oberhalb einer Doppelstockschiene unter der Dachplatte befindet und ein anderer Teil unterhalb einer in Längsrichtung beabstandeten Doppelstockschiene verläuft. Die Trennwand ist dabei um eine Richtung oder fiktive Linie gekrümmt, welche horizontal und parallel zur Trennwandfläche in der ersten und zweiten Stellung der Trennwand verläuft. Die Biegung kann in Form einer im wesentlichen kontinuierlichen Krümmung oder als Abwinkelung in einem konzentrierten Abschnitt oder als Kombination hiervon erfolgen. Die Biegbarkeit ist vorteilhafterweise über die gesamte oder zumindest die überwiegende Länge der Trennwand gegeben. Die Biegbarkeit bei gleichzeitig ausreichender Eigensteifigkeit kann durch Wandmaterial selbst, durch Wandschichtung oder vorteilhafterweise auch bei einem Wandmaterial geringer Eigensteifigkeit durch zusätzliche elastische verformbare Einsätze in oder an der Trennwand, welche in der ersten vertikalen Stellung im wesentlichen vertikal verlaufen. Besonders vorteilhaft sind Elemente, welche bis zu einem bestimmten Belastungsgrad eine hohe Steifigkeit aufweisen und sich bei darüber hinausgehender Belastung reversibel umbiegen. Beispielsweise zeigen Winkelprofile oder gewölbte Profile ein solches Verhalten.

Die Trennwand weist vorteilhaft zur Erzielung einer Wärmeisolation zwischen unterschiedlichen Temperaturzonen getrennter Teilräume eines Kühlraums eine Wanddicke auf, welche vorteilhafterweise wenigstens 15 mm, insbesondere wenigstens 25 mm beträgt. Die Trennwand kann vorteilhafterweise eine Eigensteifigkeit aufweisen, welche beim Verlagern in die zweite Position ein Schieben durch den Benutzer ermöglicht, ohne dass die Trennwand sich zu stark durchbiegt oder gar abknickt.

Die Erfindung ist nachfolgend anhand bevorzugter Beispiele noch eingehend veranschaulicht, wobei ohne Beschränkung hierauf ein in zwei Temperaturzonen aufzuteilenden Kühlraum als Laderaum angenommen ist. Dabei zeigt:
- Fig. 1A: eine bevorzugte Ausführungsform in Seitenansicht mit der Trennwand in horizontaler Ruhestellung,
- Fig. 1B: eine Draufsicht auf ein Führungssystem der Anordnung nach Fig. 1,
- Fig. 2A: die Anordnung nach Fig. 1 mit teilweise ausgezogener Trennwand,
- Fig. 2B: das Führungssystem nach Fig. 1B in der Stellung nach Fig. 2A,
- Fig. 3A: die Anordnung nach Fig. 1A oder Fig. 2A mit der Trennwand in vertikaler Stellung,
- Fig. 3B: das Führungssystem nach Fig. 1B oder Fig. 2B in der Stellung nach Fig. 3A,
- Fig. 4: eine schräge Zwischenstellung der Trennwand,
- Fig. 5: eine weitere Ausführung einer Trennwand,
- Fig. 6: eine segmentierte Trennwand.

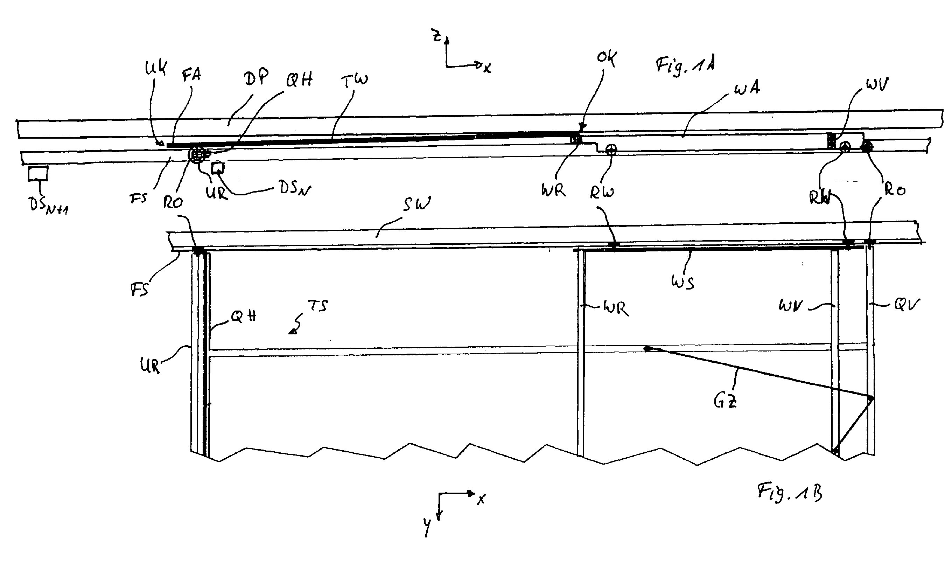

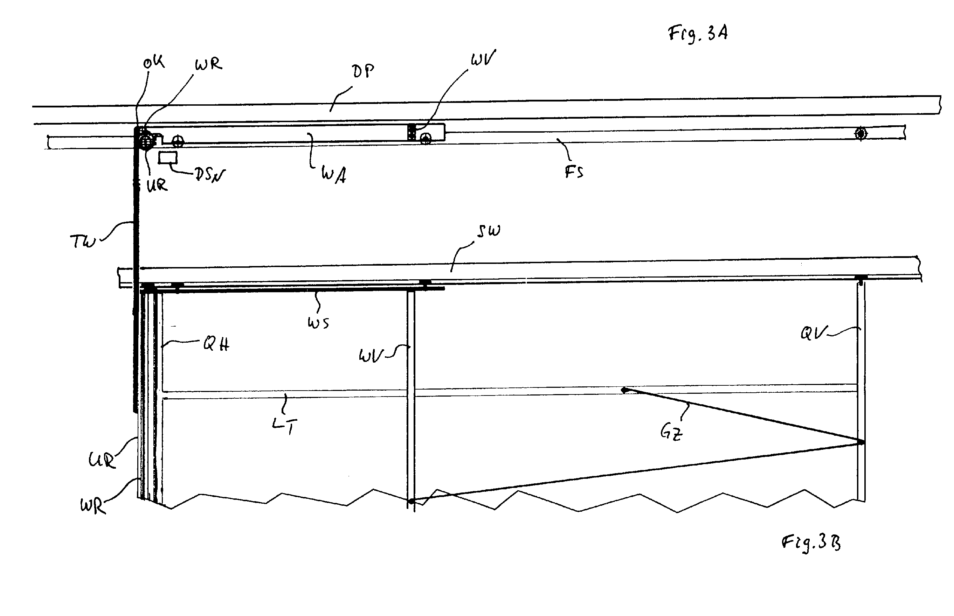

Fig. 1A zeigt in einer Seitenansicht einen Ausschnitt aus dem Dachbereich eines Kühlfahrzeugs mit einer Dachplatte DP, einer Trennwand TW und einem Führungssystem, mit dessen Hilfe die Trennwand in definierter Weise zwischen der in Fig. 1A skizzierten horizontalen Ruhestellung und der in Fig. 3A skizzierten vertikalen Trennstellung von nur einer Person verlagerbar ist.

In Fig. 1B sind Details eines vorteilhaften Führungssystems in Draufsicht entsprechend der in Fig. 1A skizzierten Ruhestellung der Trennwand skizziert. Das Führungssystem umfasst dabei insbesondere einen Trägerschlitten TS, Führungsschienen FS an den Seitenwänden SW des Kühlraums, eine Umlenkrolle UR, einen relativ zu dem Trägerschlitten verfahrbaren Waren WA und eine Rückholeinrichtung. Die Trennwand TW ist in Fig. 1B nicht mit eingezeichnet und lediglich durch ihre Unterkante UK angedeutet. In Fig. 1A ist der Übersichtlichkeit halber der Trägerschlitten nicht eingezeichnet und nur durch Rollen und einen Querträger repräsentiert. Der Trägerschlitten ermöglicht die Trennwand in unterschiedliche Positionen in Längsrichtung x (in einem rechtwinkligen Koordinatensystem) und so die Aufteilung des Kühlraums in zwei Teilräume variabel zu gestalten. Der Trägerschlitten TS ist in Längsrichtung hierfür verschiebbar und in unterschiedlichen Längspositionen arretierbar, wofür vorteilhafterweise ein gemeinsames Bedienelement, insbesondere ein Handgriff an einem Zugseil für den Benutzer vorgesehen ist. Bei nur einer bestimmten Längsposition der Trennwand kann der Trägerschlitten durch eine ortsfeste Konstruktion ersetzt sein. Die Trennwand TW liegt in der in Fig. 1A skizzierten Stellung im wesentlichen horizontal parallel zu der Dachplatte DP in geringem Abstand von dieser. Die Trennwand weise eine Eigensteifigkeit auf, welche ein Durchhängen der Trennwand nach unten weitgehend verhindert. Die Trennwand kann vorteilhafterweise durch in Längsrichtung x verlaufende Längsträger LT des Trägerschlittens oder darauf angeordnete Führungen vertikal abgestützt sein. In der Stellung nach Fig. 1A liegt die Unterkante UK der Trennwand in Längsrichtung x, welches zugleich die Fahrtrichtung des Kühlfahrzeugs sei, hinten und weist einer im skizzierten Ausschnitt nicht mehr enthaltenen rückwärtigen Türöffnung des Kühlaums zu. Die Oberkante OK der Trennwand ist in x-Richtung nach vorne weisend mit einem Wagen WA verbunden, welcher relativ zu dem Trägerschlitten in x-Richtung verfahrbar ist. Der Wagen WA kann vorteilhafterweise in denselben Führungsschienen FS wie der Trägerschlitten TS geführt sein. Der Waren WA ist vorzugsweise durch eine Rückholeinrichtung, beispielsweise einen Gummizug GZ in der in Fig. 1 skizzierten Verfahrposition relativ zu dem Trägerschlitten TS gehalten. Der Gummizug ist mit seinem dem Waren WA abgewandten Ende mit dem Trägerschlitten verbunden und im Bereich eines vorderen Querträgers QV des Trägerschlittens umgelenkt. Anstelle eines Gummizugs können auch andere an sich bekannte und geeignete Mittel, wie z. B. eine Zugfeder, eine Druckfeder einer Gasdruckfederanordnung usw. vorgesehen sein. Die Rückholeinrichtung kann insbesondere auch weitgehend in hohle Träger des Trägerschlittens und/oder des Wagens integriert sein.

Trägerschlitten und Waren sind vorteilhafterweise mittels Rollen RO bzw. RW in den Führungsschienen FS geführt. Der Wagen WA kann auch an dem Trägerschlitten selbst verfahrbar gelagert sein. Die Verfahrbarkeit des Wagens WA relativ zu dem Trägerschlitten ist in x-Richtung sowohl nach vorne bis zu der in Fig. 1A, 1B skizzierten Position als auch nach hinten bis zu den in Fig. 3A, 3B skizzierten Position begrenzt. Sowohl Trägerschlitten TS als auch Wagen WA sind für die Zwecke der Längsverschiebung bzw. Längsverfahrung als verwindungssteif und scherfest anzusehen und können insbesondere als Schweißkonstruktionen ausgeführt sein und zusätzlich zu dem eingetragenen Längsund Querelementen auch noch Schrägaussteifungen enthalten. Der Wagen WA weist beispielsweise Seitenwangen WS auf, an welchen die Führungsrollen RW angeordnet sind. Die Seitenwangen sind durch Querstreben WV und WR in Querrichtung y gegeneinander abgestützt. An der hinteren Querstrebe WR ist die Oberkante OK der Trennwand befestigt Der Trägerschlitten TS ist im skizzierten Beispiel aus wenigstens zwei Längsträgern LT, einem vorderen Querträger QV und einem hinteren Querträger QH aufgebaut, wobei an den vorderen Querträger QV ein vorderes Rollenpaar RO und an dem hinteren Querträger QH ein hinteres Rollenpaar RO gelagert sind. Im Bereich des hinteren Querträgers ist eine Umlenkeinrichtung vorgesehen, welche vorzugsweise als drehbar gelagerte horizontale Walze UR ausgeführt ist, aber auch durch eine reibungsarme gewölbte Gleitfläche gegeben sein kann.

Die Führungsschienen können vorteilhafterweise in Form von U-, C- oder ähnlichen bekannten Profilen auf den Innenflächen der Seitenwände befestigt sein und in dieser Anordnung auch einfach nachgerüstet werden. In anderer Ausführung können die Führungsschienen alternativ oder zusätzlich an der Innenfläche der Deckenplatte DP befestigt sein. Die Führungsschienen können auch teilweise oder vollständig in die Seitenwände und/oder die Dachplatte integriert sein. An oder in den Seitenwänden sind zusätzlich sogenannte Doppelstockschienen als Querbalken gehalten, welche in vertikalen Führungslisten in den Seitenwänden höhenverstellbar sind. Zur Erzielung einer großen durchgehenden Ladehöhe werden diese Doppelstockschienen ganz nach oben bis dicht an die Führungsschienen FS verschoben, wobei gewährleistet bleibt, dass der Trägerschlitten TS mit Wagen WA und Trennwand TW über den Doppelstockschienen hinweg verschoben werden kann. Zwei derartige Doppelstockschienen sind in Fig. 1A als DS_{N} und DS_{N+1} repräsentativ in ihrer oberen Position eingezeichnet.

In der horizontalen Ruhestellung nach Fig. 1A, 1B liegt die Trennwand TW in Längsrichtung x überwiegend vor der Umlenkeinrichtung UR. Ein eventuell nach hinten überstehender freier Abschnitt FA der Trennwand bis zu deren Unterkante UK bleibt durch die Eigensteifigkeit der Trennwand horizontal ausgerichtet und kann beim Verschieben des Trägerschlittens nach hinten problemlos über die nächste Doppelstockschiene hinweg geführt werden. Der zwischen Wagen WA und Umlenkrolle UR liegende Abschnitt, nachfolgend auch als geführter Abschnitt bezeichnet, kann unter seinem Eigengewicht eine geringe Durchbiegung aufweisen.

Zur Trennung des durchgehenden Kühlraums in zwei Teilräume kann der Trägerschlitten in die entsprechende Längsposition in x-Richtung verschoben und in dieser arretiert werden. Hierfür kann z. B. vorteilhafterweise ein flexibles Zugelement, insbesondere ein Seil, eine Kette, ein Band etc. an dem hinteren Querträger QH des Trägerschlittens angebracht sein, welches auf Zug eine Arretiereinrichtung entgegen einer rückstellenden Schließkraft löst und bei gelöster Arretiereinrichtung ein Verschieben des Trägerschlittens in x-Richtung erlaubt. Bei Wegfall der Zugkraft auf das Zugelement wird der Trägerschlitten formschlüssig und/oder kraftschlüssig in der erreichten Längsposition unter dem Einfluss der Schließkraft selbsttätig arretiert. Vorzugsweise sind diskrete Längspositionen vorgesehen. Das Zugelement kann vorteilhafterweise über eine Doppelstockschiene hinweg verlegt werden, um eine Verschiebung des hinteren Querträgers QH über eine solche Doppelstockschiene hinweg zu erreichen.

In der erreichten und arretierten Längsposition des Trägerschlittens übt der Benutzer eine Zugkraft mit einer Horizontalkomponente nach hinten auf die Unterkante der Trennwand aus, so dass diese mit dem Wagen WA entgegen der rückstellenden Kraft des Gummizugs GZ relativ zum Trägerschlitten nach hinten gezogen wird. Die Zugkraft kann durch ein weiteres, an der Unterkante befestigtes Zugelement erfolgen. Vorzugsweise weist die Trennwand an der Unterkante ein Einhängeelement (Lasche, Öse usw.) auf, in welche ein auch für die Verstellung der Doppelstockschienen benutzter Haken eingehängt werden kann. Die Zugkraft ZK hat zugleich eine Vertikalkomponente nach unten und ist dadurch ergonomisch günstig. Die Vertikalkomponente bewirkt durch die Biegbarkeit der Trennwand um eine in y-Richtung verlaufende horizontale Richtung oder Linie eine Verlagerung der Unterkante UK der Trennwand nach unten, so dass der freie Abschnitt FA der Trennwand, d. h. der Abschnitt zwischen der Umlenkeinrichtung UR und der Unterkante UK, unterhalb der in x-Richtung hinter der Umlenkeinrichtung liegenden Doppelstockschiene DS_{N+1} verläuft und keine Verstellung dieser Schiene erforderlich ist.

Im skizzierten bevorzugten Beispiel ist die Trennwand zerstörungsfrei in einem engen Bereich BA abwinkelbar, so dass der freie Abschnitt FA im wesentlichen gerade verläuft. Im Unterschied zu einer Krümmung mit einem gegenüber dem Durchmesser der Umlenkrolle und der Dicke der Trennwand großen Krümmungsradius sei als Abwinklung eine Richtungsänderung innerhalb eines kurzen Abschnitts der Trennwand, welcher nicht größer sei als das 2-fache der Summe von Durchmesser der Umlenkrolle und Dicke der Trennwand, verstanden. Beim hinteren Ausziehen der Trennwand nach hinten wandert der Abwinkelungsbereich entlang der Trennwand in Richtung der Oberkante OK und der freie Abschnitt FA wird länger, bis die gesamte Trennwand über die Umlenkeinrichtung gezogen ist. Dabei kann der Benutzer die nun tiefer liegende Unterkante der Trennwand auch an einem in deren Bereich vorgesehenem Handgriff greifen um die zunehmende Rückstellkraft des Gummizuges ergonomisch günstiger überwinden zu können.

Die vollständig ausgezogene Trennwand befindet sich in einer von der Umlenkeinrichtung schräg nach hinten unten verlaufenden Lage, in welcher sie vorteilhafterweise aufgrund der Eigensteifigkeit ihres Aufbaus vorteilhafterweise nur eine geringe Durchbiegung unter ihrem Eigengewicht zeigt und insbesondere nicht abknickt. Die Trennwand wird aus der schrägen Position nach unten geschwenkt und legt sich mit flexiblen Randbereichen entlang ihrer Kanten an Seitenwände und Boden des Laderaums und unterteilt auf diese Weise den Kühlraum in zwei wärmeisoliert getrennte Teilräume. In der in Fig. 3A, 3B skizzierten vertikalen Stellung der Trennwand befindet sich der Wagen WA in einer hinteren Stellung relativ zum Trägerschlitten. Vorteilhafterweise ragt die hintere Querstrebe WR des Wagens WA, an welcher die Oberkante der Trennwand befestigt ist, nach hinten bis über die Umlenkrolle. Durch den geringen Hebel zwischen der Befestigung der Trennwand an dem Wagen WA und der Anlage der Trennwand an der Umlenkrolle UR kann der Wagen entgegen der Rückstellkraft des Gummizugs in der hinteren Stellung gehalten werden. Eine Arretierung der Trennwand in der vertikalen Stellung entgegen der Zugrichtung des Gummizugs ist daher nicht erforderlich. Alternativ könnte der Wagen in der hinteren Stellung oder die Trennwand in der vertikalen Stellung auch lösbar arretiert werden. Vorteilhafterweise können Mittel vorgesehen sein, welche einer Durchbiegung der Trennwand in der aufrechten Stellung entgegenwirken, beispielsweise quer verspannbare Gurte.

Zur Rückverlagerung der Trennwand aus der aufrechten Stellung nach Fig. 3A, 3B wird die Trennwand um ihre Oberkante bzw. die Umlenkrolle als Schwenkbereich mit der Unterkante nach hinten in eine schräge Position mit angehobener Unterkante geschwenkt, wie in Fig. 5 skizziert. Die Rückstellkraft KR des Gummizugs zieht den Wagen WA und mit diesem die Oberkante OK der Trennwand in x-Richtung nach vorne. Dabei kann vorteilhafterweise der Benutzer an der Unterkante der Trennwand eine schiebende Kraft FS parallel zur Wandfläche in Richtung der Umlenkeinrichtung anzusetzen. Durch die Eigensteifigkeit der Trennwand behält diese ihre flache Form weitgehend bei und knickt insbesondere in ihrem freien Abschnitt FA nicht ab. Bei der Rückverlagerung von der schrägen Stellung in die horizontale Ruhestellung wird die Trennwand wieder an der Umlenkrolle UR abgewinkelt mit in Richtung der Unterkante wanderndem Abwinkelungsbereich BA.

Die Abwinkelbarkeit der Trennwand kann begrenzt sein und beträgt vorzugsweise wenigstens 10°. Vorteilhaft ist aber ein Aufbau der Trennwand, welcher auch eine 90°-Abwinkelung der Trennwand zerstörungsfrei zulässt, um eine Beschädigung der Trennwand bei Fehlbedienung auszuschließen. Die Trennwand kann vorteilhafterweise als Hohlkörper mit Wandflächen aus flexiblem Bahnmaterial, insbesondere Folien oder textilen Bahnen aufgebaut sein und einen oder mehrere Hohlräume aufweisen. Die gegenüberliegenden Wandflächen der Trennwand können zusätzlich zu den Kantenbereichen weitere Verbindungspunkte oder Verbindungsnähte besitzen. Die Hohlräume sind vorteilhafterweise mit wärmedämmendem Material gefüllt, welches vorzugsweise als fadenförmiges Material, insbesondere Fasermaterial ausgeführt sein kann. Bei luftdichtem Bahnmaterial kann auch vorgesehen sein, die Hohlkörper mit Druckluft oder einem die Wärmeisolation begünstigenden Gas zu befüllen.

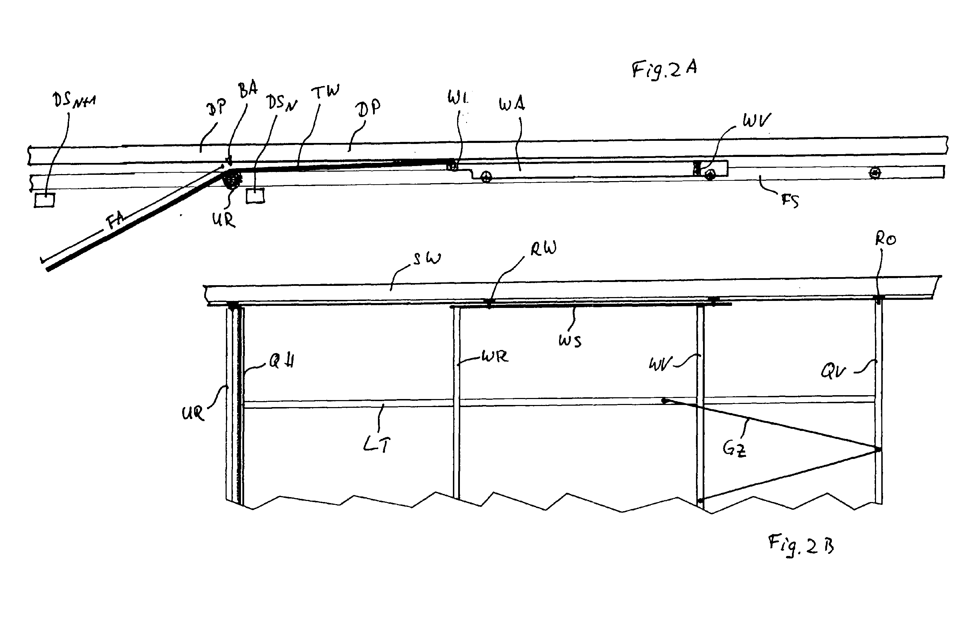

Die Trennwand kann in der horizontalen Stellung nach Fig. 1A und mit ihrem geführten horizontalen Abschnitt in Fig. 2A auf in Längsrichtung verlaufenden Führungen des Trägerschlittens aufliegen und gegen Durchhängen abgestützt sein. Diese Führungen können als reibungsarme Gleitflächen ausgeführt sein oder in anderer Ausführung Rollen aufweisen. Die Führungen können bevorzugt an den Längsträgern LT angeordnet oder auch als Gleitführungen durch deren Oberseite gebildet sein.

Während in dem bevorzugten Beispiel nach Fig. 1 bis Fig. 3 eine abwinkelbare Trennwand vorgesehen ist, kann, wie in Fig. 5 in einer Zwischenstellung entsprechend Fig. 2A skizziert, die Trennwand auch als eine mit größerem Krümmungsradius biegbare Trennwand vorgesehen sein. Der zerstörungs- bzw. knickfreie minimale Krümmungsradius beträgt vorzugsweise wenigstens das 5-fache, insbesondere wenigstens das 10-fache der Dicke der Trennwand. Der minimale Krümmungsradius ist vorteilhafterweise nicht größer als 2 m, insbesondere nicht größer als 1,50 m.

Eine biegbare Trennwand kann in vorteilhafter Ausführung beispielsweise in Form eines Grundaufbaus der Trennwand mit geringer Biegesteifigkeit und zusätzlichen aussteifenden Streben an oder in der Trennwand vorliegen, wobei diese Streben im wesentlichen in Längsrichtung der Trennwand verlaufen und somit in der ersten Stellung der Trennwand vertikal liegen. Derartige Aussteifungs-Streben können beispielsweise aus Metall oder Kunststoff, insbesondere auch mit Faserstrukturen in der Art von Glasfiber- oder Kohlefaser-Stäben bestehen. In einfacher vorteilhafter Ausführung können solche Profile gebräuchliche runde oder rechteckige Querschnitte aufweisen. Winkelprofile oder gewölbte Profile aus elastisch verformbarem Material zeigen darüber hinaus die besondere Eigenschaft, bis zu einem bestimmten Belastung, welche für eine Aussteifung des freien Abschnitts FA in der in Fig. 4 skizzierten Stellung ausreicht, nur eine geringe Durchbiegung aufzuweisen, und bei größerer an einer Stelle, im Beispiel an der Umlenkrolle, auftretender Biegebeanspruchung unter elastischer Aufspreizung reversibel abwinkelbar zu sein und insbesondere zu beiden Seiten der Abwinkelung wieder selbsttätig ihre biegesteifere Querschnittsform anzunehmen.

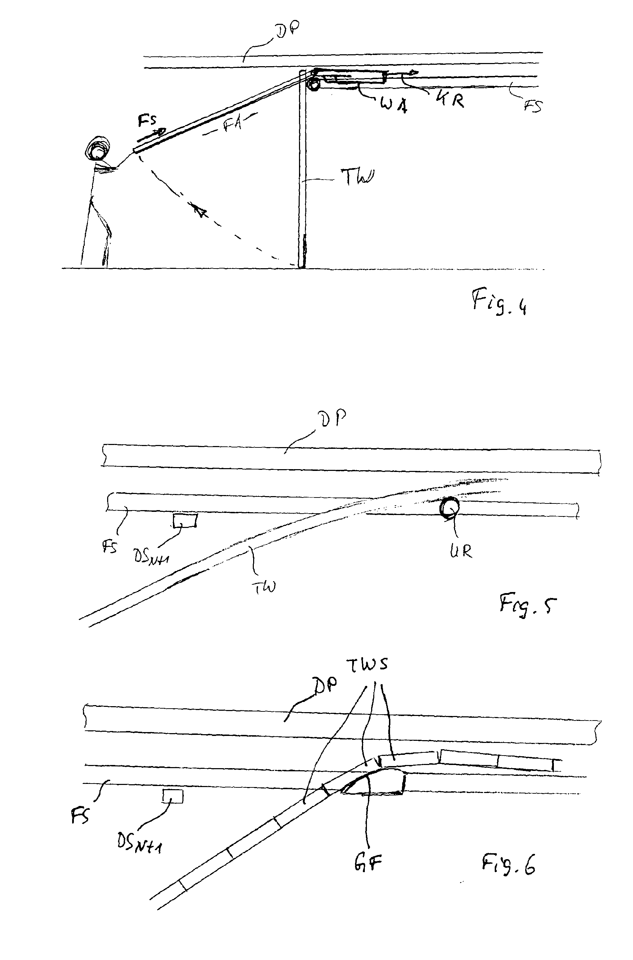

In anderer, in Fig. 6 skizzierter Ausführung kann die Trennwand aus gelenkig miteinander verbundenen Segmenten TWS aufgebaut sein, welche in sich im wesentlichen starr sind und in Querrichtung y einstückig durchgehen. Die Verbindung der Segmente erfolgt vorzugsweise an der in aufrechter Stellung nach vorne, in horizontaler Stellung nach unten weisenden Fläche der Trennwand, z. B. durch Drehgelenke, flexible Bänder, Filmscharniere. Die segmentierte Trennwand kann dann in einer Richtung, insbesondere um die Umlenkeinrichtung abgewinkelt werden, wobei Stoßflächen aneinanderstoßender, unmittelbar benachbarter Segmente auseinanderklaffen und einen Spalt bilden. Die Stoßflächen können wie skizziert eben sein oder auch korrespondierende Reliefstrukturen, z. B. nach Art einer Nut-Feder-Verbindung aufweisen. Ein Abwinkeln in Richtung der anderen Wandfläche ist durch die einseitigen Gelenkverbindungen nicht möglich, so dass beim Verlagern von der vertikalen Stellung in die horizontale Stellung die Trennwand in schräger Stellung zwischen Unterkante und Umlenkeinrichtung ausreichend steif ist, um Schubkräfte von der Unterkante her aufzunehmen. Die Umlenkeinrichtung ist in dem in Fig. 6 skizzierten Beispiel als Gleitfläche GF ausgeführt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeuganordnung mit einem Laderaum, welcher durch eine Trennwand (TW) in zwei Teilräume unterteilbar ist, wobei die Trennwand in einer ersten vertikalen Stellung (Fig. 3) den Querschnitt des Laderaums im wesentlichen vollständig verdeckt und in einer zweiten Stellung (Fig. 1) im wesentlichen horizontal mit geringem Abstand zum Dach des Laderaums liegt und durch eine Person zwischen der ersten und der zweiten Stellung verlagerbar ist, **dadurch gekennzeichnet, dass** die Trennwand bei der Verlagerung zwischen der ersten und der zweiten Stellung zumindest um eine zur Wandfläche in der ersten und der zweiten Stellung parallele horizontale Richtung (y) in sich biegbar ist.

2. Anordnung nach Anspruch 1, **dadurch gekennzeichnet, dass** der minimale Krümmungsradius der Biegung höchstens 2 m, insbesondere höchstens1,50 m beträgt.

3. Anordnung nach Anspruch 1 oder 2, **dadurch gekennzeichnet, dass** die Trennwand kontinuierlich biegbar ist.

4. Anordnung nach einem der Ansprüche 1 bis 3, **dadurch gekennzeichnet, dass** die Trennwand abwinkelbar ist, vorzugsweise um wenigstens 10°.

5. Anordnung nach einem der Ansprüche 1 bis 4, **dadurch gekennzeichnet, dass** die Trennwand Weichschaumplatten enthält.

6. Anordnung nach einem der Ansprüche 1 bis 5, **dadurch gekennzeichnet, dass** die Trennwand wenigstens eine Trennwandfläche aus flexiblem Flachmaterial enthält.

7. Anordnung nach einem der Ansprüche 1 bis 6, **dadurch gekennzeichnet, dass** die Trennwand einen oder mehrere Hohlkammern aufweist.

8. Anordnung nach Anspruch 7, **dadurch gekennzeichnet, dass** die Hohlkammern verformbar mit Isoliermaterial gefüllt sind.

9. Anordnung nach Anspruch 8, **gekennzeichnet durch** Fasermaterial als Isoliermaterial.

10. Anordnung nach einem der Ansprüche 7 bis 9, **dadurch gekennzeichnet, dass** die Hohlräume mit einem Gas befüllbar sind.

11. Anordnung nach einem der Ansprüche 1 bis 10, **dadurch gekennzeichnet, dass** die Trennwand in einem biegeschwachen Grundaufbau zusätzliche, zumindest überwiegend in Längsrichtung verlaufende, elastisch verformbare aussteifende Streben aufweist.

12. Anordnung nach einem der Ansprüche 1 bis 11, **dadurch gekennzeichnet, dass** die Trennwand mehrere biegesteife Segmente enthält, welche an demgegenüber biegeschwachen Biegebereichen miteinander verbunden sind.

13. Anordnung nach einem der Ansprüche 1 bis 12, **dadurch gekennzeichnet, dass** die Trennwand horizontale Aussteifungen zur Verringerung einer Durchbiegung senkrecht zur Wandfläche enthält.

14. Anordnung nach einem der Ansprüche 1 bis 13, **dadurch gekennzeichnet, dass** eine Umlenkeinrichtung vorgesehen ist, über welche die Trennwand bei der Verlagerung zwischen der ersten und der zweiten Stellung hinwegbewegt wird.

15. Anordnung nach Anspruch 14, **dadurch gekennzeichnet, dass** die Umlenkeinrichtung eine drehbar gelagerte Walze ist.

16. Anordnung nach einem der Ansprüche 1 bis 15, **dadurch gekennzeichnet, dass** die Trennwand in mehreren Längspositionen innerhalb des Laderaums ihre erste vertikale Stellung einnehmen kann.

17. Anordnung nach einem der Ansprüche 1 bis 16, **dadurch gekennzeichnet, dass** die Trennwand mit einem längsverschiebbaren Trägerschlitten (TS) verbunden ist.

18. Anordnung nach Anspruch 17, **dadurch gekennzeichnet, dass** der Trägerschlitten in mehreren diskreten Längspositionen arretierbar ist.

19. Anordnung nach einem der Ansprüche 1 bis 18, **dadurch gekennzeichnet, dass** die Oberkante (OK) der Trennwand mit einem längsverschiebbaren Wagen (WA) verbunden ist.

20. Längsführungen für den Trägerschlitten und/oder den Wagen an oder in den Seitenwänden und/oder dem Dach des Laderaums angeordnet sind.

21. Anordnung nach einem der Ansprüche 1 bis 19, **dadurch gekennzeichnet, dass** die mittlere Wanddicke wenigstens 15 mm, insbesondere wenigstens 25 mm beträgt.

22. Anordnung nach einem der Ansprüche 1 bis 21, **dadurch gekennzeichnet, dass** die Trennwand zur Aufrechterhaltung einer Temperaturdifferenz zwischen den Teilräumen von wenigstens 10 K ausgebildet ist.

23. Anordnung nach einem der Ansprüche 1 bis 21, **dadurch gekennzeichnet, dass** der mittlere k-Wert der Trennwand geringer als k=0,7W/m²K ist.

24. Anordnung nach einem der Ansprüche 1 bis 23, **dadurch gekennzeichnet, dass** der Laderaum ein gegenüber der Umgebung kühlbarer Kühlraum ist.
